# EUROPÄISCHE PATENTSCHRIFT

(11) **EP 2 845 674 B1**
(45) Veröffentlichungstag und Bekanntmachung des Hinweises auf die Patenterteilung: **25.11.2020**
(21) Anmeldenummer: 14183862.3
(22) Anmeldetag: 06.09.2014
(51) Int. Cl.: B23D 59/00

(54) **Verfahren zum Erkennen einer Überlastung eines Sägeblatts sowie Vorrichtung dafür**
Method for detecting an overload of a saw blade and device for same
Procédé de reconnaissance d'une surcharge d'une lame de scie et dispositif associé

(30) Priorität: 06.09.2013 AT 505562013
(43) Veröffentlichungstag der Anmeldung: 11.03.2015
(73) Patentinhaber: Prinz GmbH, 3382 Loosdorf (AT)
(72) Erfinder: FELLNER, Wolfgang, 1170 Wien (AT)
(74) Vertreter: Müllner, Martin

(56) Entgegenhaltungen:
- WO-A1-99/31637
- DD-A5- 289 732
- JP-A- H11 327 588
- US-A- 5 170 358

## Beschreibung

### Technisches Gebiet

Die Erfindung bezieht sich auf ein Verfahren zum Erkennen einer Überlastung von zumindest einem Sägeblatt einer Kreissäge zum Zersägen von Stämmen, Balken oder Pfosten aus Holz, insbesondere einer Mehrblattkreissäge, sowie auf eine Kreissägevorrichtung zur Durchführung dieses Verfahrens.

### Stand der Technik

Bei Kreissägen, insbesondere bei Mehrblattkreissägen zum Zersägen von Stämmen zu Brettern, kommt es bei buchsigen Stämmen laufend zu fehlerhaften Sägeblättern aufgrund eines zu großen Schnittdruckes. Buchsige Stämme verursachen bei zu schnellem Vorschub bei Auftreffen der dichteren Holzstellen ein charakteristisches Quietschen (das von der Eigenfrequenz der Sägeblätter bestimmt wird), wenn das Holz durch die Anlage fährt. Dabei nimmt das Sägeblatt bzw. der gesamte, mehrere Sägeblätter auf einer Welle umfassende Einhang bei einer Mehrblattkreissäge durch die auftretenden Schwingungen Schaden. Diese Schwingungen führen aber auch zu einem Schnittversatz zwischen Sägeblättern eines oberen und unteren Einhanges und damit zu einer schlechten Qualität der geschnittenen Bretter bzw. zu Ausschuss. Zumeist müssen nach einem derartigen Vorfall ein oder mehrere Blätter oder gar der gesamte Einhang getauscht werden, was zu Standzeiten führt und durch die häufig erforderlichen Sägeblattwechsel hohe Kosten an Ersatzteilen verursacht.

Bisher wurde bei solchen Vorgängen nur nach Gehör eines Maschinenführers in den Betrieb einer Kreissäge eingegriffen und z.B. der Vorschub gestoppt und die Kreissäge freigefahren, was durch Zurückfahren des Stammes um eine kleine Wegstrecke erfolgt, wodurch den Sägeblättern Zeit gegeben wird, sich zu stabilisieren, sodass etwaige Vibrationen wieder abklingen können.

Dabei ergibt sich jedoch der Nachteil, dass in einem Sägewerk sehr viele und lärmintensive Lärmquellen vorhanden sind und es auch sehr auf die Erfahrung und Aufmerksamkeit des Maschinenführers ankommt, ob ein Schaden an den Einhängen verhindert wird oder nicht. Auch die Reaktionszeiten eines Menschen, der hier ständig mit hoher Aufmerksamkeit die Maschine bedienen muss, sind gegenüber automatischen Schaltungen meist weit höher, was systematisch zu einem höheren Verschleiß der kostspieligen Sägeblätter und Einhänge führt.

Bei Materialbearbeitung ist ganz allgemein bereits bekannt, das Betriebsgeräusch für verschiedene Zwecke zu messen:

Gemäß DE 10057661 A soll der Schärfegrad einer Säge bestimmt werden, die hauptsächlich zum Schneiden von Stein bestimmt ist. In dieser Schrift ist nicht genau beschrieben, wie das vom Mikrofon gelieferte Signal ausgewertet wird; es heißt lediglich (siehe Absatz [0015] oder Anspruch 7 dieser Schrift), dass dieses Signal digitalisiert wird und in einem Rechner mit einem Kennsignal verglichen wird. Wenn das digitale Signal einen vorgegebenen Schwellenwert unterschreitet, wird das Sägeblatt als stumpf erkannt. Eine Überlastung des Sägeblatts in bestimmten kurzfristigen Betriebssituationen kann damit nicht erkannt werden.

Gemäß DE 69804982 T soll bei einer Werkzeugmaschine eine Drehzahl für ein Schneidwerkzeug bestimmt werden, bei der das so genannte "Rattern" nicht auftritt. Das Rattern ist eine Schwingung in der Resonanzfrequenz der Werkzeugmaschine, welches durch das rhythmische Auftreffen der Schneidkanten ausgelöst wird. Es wird durch akustische Messung die genaue Frequenz des Ratterns bestimmt. Da die Anzahl der Zähne des Schneidwerkzeugs bekannt ist, können bestimmte Drehzahlen berechnet werden, bei der das Rattern nicht auftritt. Auch mit diesem Verfahren kann eine Überlastung eines Sägeblatts in bestimmten kurzfristigen Betriebssituationen nicht erkannt werden.

Gemäß WO 82/03589 A wird die Lautstärke des Geräusches gemessen, das jede einzelne Schneidkante eines Fräsers auslöst (s. Fig. 1 bis 3 dieser Schrift), wenn er auf das Werkstück trifft. Wenn diese Geräusche alle gleich laut sind (s. Fig. 2 dieser Schrift), dann sind die Schneidkanten alle gleich gut; wenn die Geräusche ungleich laut sind (s. Fig. 3 dieser Schrift), dann sind die Schneidkanten ungleich gut, d.h. zumindest eine Schneidkante ist abgenützt oder sonst irgendwie schadhaft. Auch mit diesem Verfahren kann eine Überlastung eines Sägeblatts in bestimmten kurzfristigen Betriebssituationen nicht erkannt werden.

### Kurzbeschreibung der Erfindung

Ziel der Erfindung ist es, diesen Nachteil zu vermeiden und ein Verfahren sowie eine Vorrichtung zur Durchführung des Verfahrens anzugeben, welche eine Überlastung der Sägeblätter sicher erkennen und ein rechtzeitiges korrigierendes Eingreifen in den Betrieb einer (Mehrblatt-)Kreissäge ermöglichen.

Erfindungsgemäß wird dies durch die kennzeichnenden Merkmale des Anspruchs 1 erreicht. Durch die vorgeschlagenen Verfahrensschritte wird sichergestellt, dass eine Überlastung der Sägeblätter, die zu einem markanten Anstieg des Betriebsgeräusches der (Mehrblatt-)Kreissäge in einem bestimmten Frequenzbereich führt, sicher erkannt und entsprechende Gegenmaßnahmen ergriffen werden können.

In diesem Zusammenhang ist es zweckmäßig, gemäß den Merkmalen des Anspruchs 2 vorzugehen. Dadurch ist ein sicheres Erkennen einer Überlastung der Sägeblätter gewährleistet. So hat sich bei Versuchen herausgestellt, dass bei einer Überlastung der Sägeblätter diese in Schwingungen geraten und es zu einem Anstieg des Geräusches im angegebenen Frequenzbereich in einem signifikanten Ausmaß kommt und ein solcher Betriebsfall damit sehr sicher erkannt werden kann.

Erfindungsgemäß werden die Merkmale des Anspruchs 3 vorgeschlagen. Dadurch ergibt sich ein einfacher Aufbau, mit dem eine Überlastung der Sägeblätter einer (Mehrblatt-)Kreissäge sicher erkannt werden kann. Je nach Anlage kann die Steuerung entweder ein akustisches oder optisches Alarmsignal für ein manuelles Eingreifen durch einen Benutzer und/oder ein automatisches Eingreifen in die Steuerung der Kreissäge bewirken. Ein Eingreifen in die Steuerung der Kreissäge kann beispielsweise ein automatisches Stoppen des Vorschubs sein. Gegebenenfalls können die Sägeblätter frei gefahren werden, indem ein Stück zurückgefahren wird. Die genauen Frequenzen, die detektiert werden, sowie die Höhe und Dauer der Überschreitung des Schallpegels in diesen Frequenzbereichen können je nach Art der Anlage individuell angepasst werden, ebenso wie die konkreten Eingriffe in die Steuerung der Kreissäge.

Gemäß einem weiteren Merkmal der Erfindung sind die Merkmale des Anspruchs 4 vorgesehen. Die gespeicherten Daten sind über LAN-Anschluss jederzeit lokal oder im Internet abrufbar. Durch die kontinuierliche Messung der Schallpegel und den Vergleich mit gespeicherten Werten über einen längeren Zeitraum wird der langsame Anstieg des Schallpegels beim Verschleiß des Sägeblatts sichtbar, und die gewonnenen Daten können ebenfalls zu einer effizienteren Steuerung genutzt werden. So kann ein Signal ausgegeben werden, sobald ein Sägeblatt stumpf ist und getauscht werden muss, bzw. es kann durch einen automatischen Eingriff in die Steuerung der Kreissäge beispielsweise bei stumpfer werdenden Sägeblättern der Vorschub entsprechend verlangsamt werden und dadurch die Lebensdauer der Sägeblätter erhöht werden. Es kommt in Folge zu einer effektiveren Nutzung jedes einzelnen Sägeblatts, was die Kosten des Betriebs der Säge senkt.

Durch die Merkmale des Anspruchs 5 ergeben sich einerseits ein Schutz des Mikrofons vor abspringenden Spänen und auch eine Richtwirkung der Mikrofonanordnung, sodass ein omnidirektionales Mikrofon eingesetzt werden kann und trotzdem eine Beeinflussung durch andere Schallquellen weitgehend vermieden wird.

Um das Mikrofon vor Staub und Sägespänen zu schützen, können die Merkmale des Anspruchs 6 vorgesehen werden. Der Pfropfen kann je nach Staubbelastung regelmäßig getauscht oder gereinigt werden.

Will man dies vermeiden, kann man die Merkmale des Anspruchs 7 vorsehen. Wie im Rahmen der vorliegenden Erfindung gefunden wurde, beeinflusst ein herkömmliches Sieb, wie es zum Beispiel für die Zubereitung von Tee verwendet wird, die Schallwellen kaum, dies gilt auch dann, wenn man die Öffnungen des Siebs durch eine dünne Gummihaut verschließt. Solch eine Gummihaut kann in einfacher Weise durch Aufsprühen auf das Sieb aufgebracht werden. Entsprechende Spraydosen mit flüssigem Gummi sind im Handel erhältlich. Schützt man den Schaumstofftropfen mit solch einem gummierten Sieb, genügt es, dieses von Zeit zu Zeit abzuwischen.

Um ausschließlich den Luftschall zu erfassen, können schließlich die Merkmale des Anspruchs 8 vorgesehen werden.

### Kurze Beschreibung der Zeichnungsfiguren

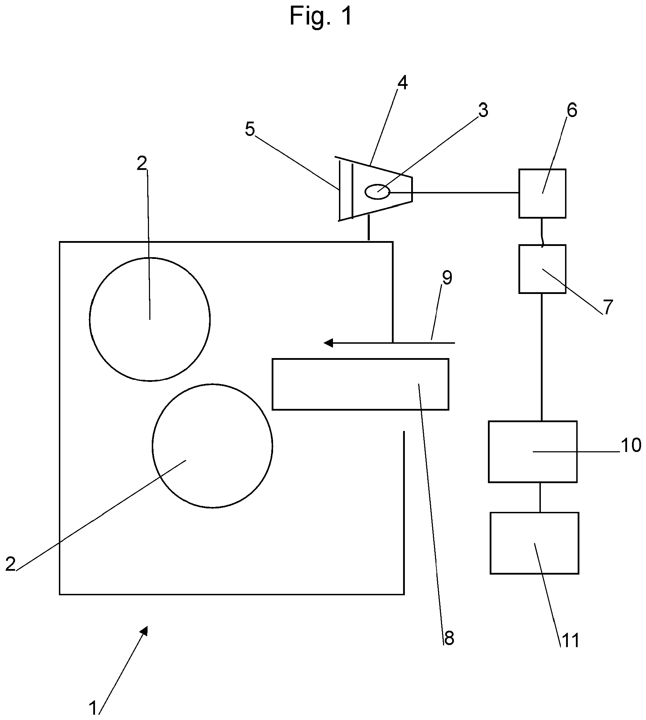

Die Erfindung wird nun anhand der beiliegenden Fig. 1 näher erläutert, die schematisch eine Mehrblattkreissäge mit einer erfindungsgemäßen Vorrichtung zeigt.

### Beschreibung der Ausführungsarten

Eine Mehrblattkreissäge 1 weist zwei Einhänge 2 auf, die durch eine Anzahl von auf einer gemeinsamen Welle gehaltenen Kreissägeblättern gebildet sind. Ein Baumstamm 8 wird in Richtung des Pfeils 9 gegen die Einhänge 2 vorgeschoben und von diesen zerteilt.

An einem Gehäuse der Mehrblattkreissäge 1 oder in deren unmittelbaren Nähe ist ein Mikrofon 3 angeordnet, das in einem schallharten Trichter 4 angeordnet ist. Dabei ist das Mikrofon 3 schallentkoppelt gelagert.

Zum Schutz vor Staub und Sägespänen ist im Trichter 4 ein Pfropfen 5 aus einem offenporigen Schaumstoff angeordnet, der die vordere Öffnung des Trichters 4 abdeckt.

Dem Mikrofon 3 ist ein Vorverstärker 6 nachgeschaltet, der die Signale des Mikrofons 3 verstärkt. Zur Auswertung der Signale ist dem Vorverstärker 6 ein Bandpassfilter 7 nachgeschaltet, das Signale in einer Bandbreite von ca. 900Hz bis 4kHz durchlässt. In einer Auswerteschaltung 10 werden die gefilterten Signale im Hinblick auf einen Anstieg des Schallpegels untersucht. Bei Überschreiten eines voreingestellten Pegelanstiegs im gemessenen Bereich für einen bestimmten Zeitraum wird ein Signal an eine Steuerung 11 abgegeben, welches bewirkt, dass der Vorschub des Stammes 8 gestoppt wird, gegebenenfalls kann dieser auch eine bestimmte Wegstrecke, z.B. 30 bis 40 cm, zurückgezogen werden. Dadurch können die Schwingungen der Kreissägeblätter der Einhänge 2, die bei einer Überlastung der Kreissägeblätter auftreten, abklingen, wonach der Baumstamm 8 wieder gegen die Einhänge 2 vorgeschoben werden kann.

Weiters können die Ausgangssignale der Auswerteschaltung 10 auch einer nicht dargestellten Signalisiereinrichtung, z.B. einer optischen oder akustischen Warneinrichtung, zugeführt werden.

## Patentansprüche

1. Verfahren zum Erkennen einer Überlastung von zumindest einem Sägeblatt einer Kreissäge zum Zersägen von Stämmen, Balken oder Pfosten aus Holz, insbesondere einer Mehrblattkreissäge, **dadurch gekennzeichnet, dass** eine Schallmessung, insbesondere Luftschallmessung, des Betriebsgeräuschs des Sägeblatts durchgeführt wird und bei einem Überschreiten des Schallpegels im Bereich eines zuvor definierten Frequenzbereichs um einen vorbestimmten Betrag für einen bestimmten Zeitabschnitt, verursacht durch das Schwingen des Sägeblatts bzw. der Sägeblätter in der Eigenfrequenz, ein Alarm ausgelöst wird oder ein Eingriff in den Betrieb der Kreissäge, beispielsweise durch ein Stoppen des Vorschubs, vorgenommen wird.

2. Verfahren nach Anspruch 1, **dadurch gekennzeichnet, dass** der Anstieg des Schallpegels, verursacht durch das Schwingen des Sägeblatts bzw. der Sägeblätter in der Eigenfrequenz, in einem vordefinierten Frequenzbereich von 900Hz bis 4kHz erfasst wird und bei einem Anstieg des Schallpegels um einen Betrag von mindestens ca. 8 bis 14dB in diesem Frequenzbereich ein Alarm ausgelöst und/oder in den Betrieb der Kreissäge eingegriffen wird.

3. Kreissägevorrichtung zur Durchführung des Verfahrens nach Anspruch 1 oder 2, **dadurch gekennzeichnet, dass** sie ein Messmikrofon (3), ein Bandpassfilter (7) mit einem Durchlass-Frequenzbereich von 900Hz bis 4kHz und eine einen Signalanstieg erfassende Auswerteschaltung (10) aufweist, dass die Auswerteschaltung (10) dem Messmikrofon (3) unter Zwischenschaltung des Bandpassfilters (7) nachgeschaltet ist und dass die Auswerteschaltung (10) mit einer Steuerung (11) der Kreissäge (1) und/oder einer Signaleinrichtung verbunden ist.

4. Kreissägevorrichtung nach Anspruch 3, **dadurch gekennzeichnet, dass** die Auswerteschaltung einen Speicher aufweist, welcher die Schallpegelmessungen über längere Zeiträume speichert, wobei die gespeicherten Werte von der Auswerteschaltung miteinander vergleichbar sind, wodurch durch den kontinuierlichen Anstieg des Schallpegels die Abnutzung des Sägeblatts erfassbar ist.

5. Kreissägevorrichtung nach Anspruch 3 oder 4, **dadurch gekennzeichnet, dass** das Messmikrofon (3) von einem Trichter (4) umgeben ist, der Frequenzen kleiner 900Hz dämpft und solche zwischen 900Hz und 4kHz verstärkt und auf das Sägeblatt (2) der Kreissäge (1) ausgerichtet ist.

6. Kreissägevorrichtung nach Anspruch 5, **dadurch gekennzeichnet, dass** dem Messmikrofon (3) ein offenporiger Schaumstoffpfropfen (5) vorgesetzt ist.

7. Kreissägevorrichtung nach Anspruch 6, **dadurch gekennzeichnet, dass** der offenporige Schaumstoffpfropfen (5) durch ein feinmaschiges, gummiertes Sieb vor Verschmutzung geschützt ist.

8. Kreissägevorrichtung nach einem der Ansprüche 5 bis 7, **dadurch gekennzeichnet, dass** das Mikrofon (3) im Trichter (4) schwingungstechnisch entkoppelt gehalten ist.

## Claims

1. Method for detecting an overload of at least one saw blade of a circular saw for sawing trunks, beams or posts made of wood, in particular of a multi-blade circular saw, **characterized in that** a sound measurement, in particular airborne sound measurement, of the operating noise of the saw blade is performed, and upon exceeding the sound level in the range of a previously defined frequency range by a predetermined amount for a determined time period, which is caused by the vibration of the saw blade and the saw blades, respectively, in the eigenfrequency, an alarm is triggered or an intervention in the operation of the circular saw is made, for example by stopping the feed.

2. Method according to claim 1, **characterized in that** the increase of the sound level, caused by the vibration of the saw blade and the saw blades, respectively, in the eigenfrequency is detected in a predefined frequency range from 900 Hz to 4 kHz, and upon an increase of the sound level by an amount of at least approximately 8 to 14 dB in this frequency range an alarm is triggered and/or an intervention in the operation of the circular saw is made.

3. Circular saw device for performing the method according to claim 1 or 2, **characterised in that** it includes a measuring microphone (3), a bandpass filter (7) with a pass frequency range of 900Hz to 4kHz, and an evaluation circuit (10) detecting a signal increase, **in that** the evaluation circuit (10) is connected downstream of the measuring microphone (3) with the interposition of the bandpass filter (7), and **in that** the evaluation circuit (10) is connected to a controller (11) of the circular saw (1) and/or a signalling means.

4. Circular saw device according to claim 3, **characterized in that** the evaluation circuit includes a memory which stores the sound level measurements over longer periods of time, wherein the stored values are comparable with one another by the evaluation circuit, whereby the wear and tear of the saw blade is detectable by the continuous increase of the sound level.

5. Circular saw device according to claim 3 or 4, **characterized in that** the measuring microphone (3) is surrounded by a funnel (4) which attenuates frequencies lower than 900Hz and amplifies those between 900Hz and 4kHz, and is oriented towards the saw blade (2) of the circular saw (1).

6. Circular saw device according to claim 5, **characterized in that** an open-cell foam plug (5) is placed in front of the measuring microphone (3).

7. Circular saw device according to claim 6, **characterized in that** the open-cell foam plug (5) is protected against contamination by a fine-meshed rubberized strainer.

8. Circular saw device according to any of claims 5 to 7, **characterized in that** the microphone (3) is held in the funnel (4) in a vibrationally decoupled manner.

## Revendications

1. Procédé de détection d'une surcharge concernant au moins une lame de scie d'une scie circulaire servant à scier des troncs, des poutres ou des poteaux en bois, s'agissant notamment d'une scie circulaire multi-lames, **caractérisé en ce que** l'on réalise une mesure du son, notamment une mesure du son aérien, correspondant au bruit de fonctionnement de la lame de scie, une alarme étant déclenchée ou une intervention, consistant par exemple à ne plus avancer l'objet à scier, ayant lieu dans le fonctionnement de la scie circulaire lorsque la vibration de la lame de scie ou des lames de scie à leur(s) fréquence(s) propre(s) provoque, dans une gamme de fréquences préalablement définie, le dépassement du niveau sonore d'une valeur préalablement définie à une période déterminée.

2. Procédé selon la revendication 1, **caractérisé en ce que** ladite alarme est déclenchée ou ladite intervention dans le fonctionnement de la scie circulaire ayant lieu lorsque, dans une gamme de fréquences prédéfinie allant de 900 Hz à 4 kHz, on détecte une augmentation du niveau sonore, provoquée par la vibration de la lame de scie ou des lames de scie à leur(s) fréquence(s) propre(s), d'une valeur d'au moins environ 8 à 14 dB dans ladite gamme de fréquences.

3. Dispositif de scie circulaire permettant de mettre en œuvre le procédé selon les revendications 1 ou 2, **caractérisé en ce qu'**il comporte un microphone de mesure (3), un filtre passe-bande (7) laissant passer une gamme de fréquences allant de 900 Hz à 4 kHz, et un circuit d'analyse (10) capable de détecter une augmentation du signal, que le circuit d'analyse (10) est disposé en aval du microphone de mesure (3), avec interposition du filtre passe-bande (7), et que le circuit d'analyse (10) est connecté à un organe de commande (11) de la scie circulaire (1) et/ou à un dispositif de signalisation .

4. Dispositif de scie circulaire selon la revendication 3, **caractérisé en ce que** le circuit d'analyse comporte une mémoire qui stocke les mesures du niveau sonore pendant des périodes prolongée, les valeurs stockées pouvant être comparées les unes avec les autres par le circuit d'analyse, ce qui permet de détecter l'usure de la lame de scie par l'augmentation continue du niveau sonore.

5. Dispositif de scie circulaire selon les revendications 3 ou 4, **caractérisé en ce que** le microphone de mesure (3) est entouré d'un entonnoir (4) qui attenue des fréquences inférieures à 900 Hz tout en amplifiant celles entre 900 Hz et 4 kHz et qui est orienté vers la lame de scie (2) de la scie circulaire (1).

6. Dispositif de scie circulaire selon la revendication 5, **caractérisé en ce qu'**un bouchon en mousse à cellules ouvertes (5) est placé devant le microphone de mesure (3).

7. Dispositif de scie circulaire selon la revendication 6, **caractérisé en ce que** le bouchon en mousse à cellules ouvertes (5) est protégé de salissures par un tamis caoutchouté à mailles fines.

8. Dispositif de scie circulaire selon l'une des revendications 5 à 7, **caractérisé en ce que** le microphone (3) est disposé au sein de l'entonnoir (4) de manière à être découplé des vibrations.
